(19) Europäisches Patentamt / European Patent Office / Office européen des brevets

(11) **EP 3 371 574 B1**

(12) # FASCICULE DE BREVET EUROPEEN

(45) Date de publication et mention
de la délivrance du brevet:
**31.03.2021 Bulletin 2021/13**

(21) Numéro de dépôt: **16806245.3**

(22) Date de dépôt: **03.11.2016**

(51) Int Cl.:
*G01N 21/45* *(2006.01)*   *G01N 21/47* *(2006.01)*
*G01N 15/14* *(2006.01)*   *G03H 1/04* *(2006.01)*
*G03H 1/08* *(2006.01)*   *G01N 15/10* *(2006.01)*

(86) Numéro de dépôt international:
**PCT/FR2016/052846**

(87) Numéro de publication internationale:
**WO 2017/077238 (11.05.2017 Gazette 2017/19)**

(54) **DISPOSITIF ET PROCÉDÉ D'OBSERVATION D'UN OBJET PAR IMAGERIE SANS LENTILLE**

VORRICHTUNG UND VERFAHREN ZUR BEOBACHTUNG EINES OBJEKTS MITTELS
LINSENFREIER ABBILDUNG

DEVICE AND METHOD FOR OBSERVING AN OBJECT BY LENSLESS IMAGING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.11.2015 FR 1560587**

(43) Date de publication de la demande:
**12.09.2018 Bulletin 2018/37**

(73) Titulaires:
• **Commissariat à l'énergie atomique
  et aux énergies alternatives
  75015 Paris (FR)**
• **Biomérieux
  69280 Marcy-L'Etoile (FR)**

(72) Inventeurs:
• **DOMENES, Mickael
  38340 Voreppe (FR)**
• **JOSSO, Quentin
  69007 Lyon (FR)**
• **PERRAUT, François
  38134 Saint Joseph de Riviere (FR)**

(74) Mandataire: **INNOV-GROUP
310, avenue Berthelot
69372 Lyon Cedex 08 (FR)**

(56) Documents cités:
**EP-A1- 2 592 459   WO-A1-2014/184390**

**Description**

## DOMAINE TECHNIQUE

Le domaine technique de l'invention est l'imagerie, en particulier l'imagerie sans lentille, technique permettant d'observer un objet placé face à un capteur d'image, sans optique de grandissement interposée entre l'objet et le capteur. L'objet peut notamment être un échantillon biologique.

## ART ANTERIEUR

L'observation d'objets, par exemple des échantillons biologiques, par imagerie sans lentille connaît un développement important depuis ces dix dernières années. Cette technique permet d'observer un objet en le disposant entre une source de lumière et un capteur d'image matriciel, sans disposer de lentille de grandissement optique entre l'objet et le capteur d'image. Ainsi, le capteur d'image collecte une image de l'onde lumineuse transmise par l'objet.

Cette image est formée de figures d'interférence entre une onde lumineuse émise par la source puis transmise par l'échantillon, et des ondes de diffraction, résultant de la diffraction par l'échantillon de l'onde lumineuse émise par la source. Ces figures d'interférences sont parfois dénommées figures de diffraction, ou désignées par le terme anglais « diffraction pattern ».

La publication Repetto L., «Lensless digital holographic microscope with light-emitting diode illumination », Optics Letters, May 2004, décrit un dispositif comportant un objet disposé entre un capteur d'image, de type CCD, et une source de lumière, en l'occurrence une diode électroluminescente. Aucune optique de grandissement n'est disposée entre l'objet et le capteur d'image. Dans l'exemple décrit dans cette publication, l'objet comprend des billes de Latex. Sous l'effet de l'éclairement par la source de lumière, chaque bille produit, sur l'image formée par le capteur d'image, une figure de diffraction.

Le document WO2008090330 décrit un dispositif permettant l'observation d'échantillons biologiques, en l'occurrence des cellules, par imagerie sans lentille. Le dispositif permet d'associer, à chaque cellule, une figure d'interférence dont la morphologie permet d'identifier le type de cellule. L'imagerie sans lentille apparaît alors comme une alternative simple, et peu onéreuse, à un microscope classique. De plus, elle permet d'obtenir un champ d'observation nettement plus important que ne peut l'être celui d'un microscope. On comprend alors que les perspectives d'application liées à cette technologie sont importantes.

La demande de brevet EP2592459 décrit un dispositif pour former un hologramme d'un objet, l'objet étant illuminé par une onde lumineuse incidente rendue convergente par une lentille disposée entre une source de lumière et l'objet.

La demande de brevet WO2014184390 décrit un dispositif pour former un hologramme représentatif d'une colonie bactérienne. La colonie bactérienne est illuminée par un faisceau laser parallèle. La taille du faisceau atteignant la colonie bactérienne peut varier en fonction d'une distance par rapport à une lentille disposée entre une source du faisceau laser et un support sur lequel la colonie bactérienne est disposée.

Dans l'ensemble des documents mentionnés ci-dessus, l'image de l'objet est acquise selon un grandissement supérieur ou égal à 1, en fonction de la position de l'objet par rapport au capteur d'image. Bien que le champ d'observation soit satisfaisant, certaines applications nécessitent de disposer d'un champ d'observation plus important. Par ailleurs, il peut être souhaitable d'utiliser un dispositif dont le grandissement puisse être variable. L'invention répond à ces besoins

## EXPOSE DE L'INVENTION

Un objet de l'invention est un dispositif d'observation d'un objet par imagerie sans lentille selon la revendication 1. Le dispositif comporte :

- une source de lumière, apte à générer une onde lumineuse, dite onde d'émission, se propageant selon un axe de propagation ;
- un capteur d'image ;
- un support, interposé entre le capteur d'image et la source de lumière, apte à maintenir un objet, de telle sorte que le capteur d'image est apte à former une image d'un objet maintenu sur le support ;
- un système optique, disposé entre la source de lumière et le support, apte à former, à partir de ladite onde d'émission, une onde incidente convergente, se propageant dudit système optique jusqu'au support.

Le support définit un plan, dit plan objet, perpendiculaire à l'axe de propagation et passant par le support, ledit système optique étant alors apte à conjuguer la source de lumière avec une source secondaire, située dans un demi espace délimité par le plan objet et comportant le capteur d'image, autrement-dit dans un demi espace délimité par le plan objet et ne comportant pas la source de lumière.

Le système optique peut être configuré de telle sorte que ladite source secondaire est située :

- soit entre le support et le capteur d'image ;
- soit dans un demi espace délimité par un plan de détection, selon lequel s'étend le capteur d'image, et ne comportant pas la source de lumière, autrement-dit ne comportant pas le support.

Selon l'invention le système optique est configuré de telle sorte que ladite source secondaire est située plus proche du capteur d'image que du support. Ainsi, l'image de l'objet, maintenu par le support, sur le capteur d'image, est affectée d'un grandissement transversal inférieur à 1

Le système optique peut être paramétré selon un paramètre, de telle sorte que la position de ladite source secondaire est ajustable en fonction dudit paramètre. Ce paramètre peut notamment être une position du système optique selon l'axe de propagation, ou une distance focale du système optique. Cela permet de faire varier le grandissement transversal d'une image de l'objet, ce dernier étant maintenu par le support.

Un autre aspect de l'invention est un procédé d'observation d'un objet par imagerie sans lentille selon la revendication 6. Le procédé comporte les étapes suivantes :

a) disposer l'objet entre une source de lumière et un capteur d'image, la source de lumière étant couplée à un système optique, placé entre la source de lumière et l'objet ;
b) activer la source de lumière, la source de lumière émettant alors une onde lumineuse dite onde d'émission se propageant jusqu'au système optique, ce dernier formant une onde lumineuse incidente convergente se propageant jusqu'à l'objet ;
c) acquérir, à l'aide du capteur d'image, une image de l'objet ainsi exposé à ladite onde incidente convergente.

L'onde d'émission est émise selon un axe de propagation, l'objet définissant un plan, dit plan objet, passant par l'objet et perpendiculaire audit axe de propagation ; lors de l'étape b), ledit système optique conjugue alors la source de lumière avec une source de lumière dite secondaire, cette dernière étant située dans un demi espace délimité par ledit plan objet et comportant le capteur d'image, autrement dit dans un demi espace délimité par le plan objet et ne comportant pas la source de lumière.

La source de lumière secondaire peut ainsi être située :

- soit entre l'objet et le capteur d'image ;
- soit dans un demi espace délimité par un plan de détection, selon lequel s'étend le capteur d'image, et ne comportant pas la source de lumière (ou ne comportant pas le support).

Selon l'invention le système optique est configuré de telle sorte que ladite source secondaire est située plus proche du capteur d'image que de l'objet, de telle sorte que l'image de l'objet sur le capteur d'image soit affectée d'un grandissement transversal inférieur à 1.

Le procédé peut comporter une étape d'ajustement de la position de ladite source secondaire en fonction d'un paramètre du système optique. Ce paramètre peut être :

- une distance focale dudit système optique ;
- une position du système optique selon ledit axe de propagation.

Lors de l'étape c), le capteur d'image peut être exposé à une onde dite d'exposition comportant :

- une onde transmise par l'objet, résultant de la transmission, par l'objet, de l'onde incidente convergente ;
- une onde de diffraction résultant de la diffraction, par l'objet, de l'onde incidente convergente.

La source de lumière émettant l'onde lumineuse d'émission selon une longueur d'onde, l'objet est de préférence transparent ou translucide vis-à-vis de ladite longueur d'onde. Par exemple, l'objet comporte des particules dispersées dans ou à la surface d'un milieu, ce dernier étant transparent ou translucide à ladite longueur d'onde.

Le procédé peut comporter une étape d) d'application d'un algorithme de reconstruction holographique à tout ou partie de l'image de l'objet formée sur le capteur d'image. Cela permet notamment d'obtenir une image reconstruite dans un plan dit de reconstruction, s'étendant parallèlement au plan de détection.

Le procédé peut notamment être mis en œuvre à l'aide d'un dispositif décrit dans cette demande, dont les principales caractéristiques ont été indiquées ci-avant.

L'invention sera mieux comprise à travers la description détaillée donnée ci-après, laquelle se base des exemples de réalisation non limitatifs, illustrés par les figures énumérées ci-dessous.

## FIGURES

La figure 1A représente un premier mode de réalisation de l'invention. Les figures 1B et 1C représentent des exemples d'objets susceptibles d'être observés grâce à l'invention.
La figure 2 représente différents modes de réalisation de l'invention.
La figure 3 représente l'évolution du grandissement conféré par le dispositif en fonction de la position de la position de la source secondaire par rapport à l'objet.
Les figures 4A à 4E illustrent certaines configurations commentées dans la description, en lien avec la figure 3.
La figure 5A représente un dispositif expérimental. La figure 5B représente un détail d'une mire utilisée dans ce dispositif. La figure 5C représente un autre dispositif expérimental.
Les figures 6A, 6B et 6C illustrent des images acquises à l'aide du dispositif expérimental représenté sur la figure 5A.

Les figures 7A, 7B et 7C représentent des images obtenues par reconstruction holographique, en se basant respectivement sur les figures 6A, 6B et 6C.

Les figures 8A et 8B représentent des images acquises à l'aide d'un dispositif expérimental similaire à celui représenté sur la figure 5C.

Les figures 9A et 9B représentent des images obtenues par reconstruction holographique, en se basant respectivement sur les figures 8A et 8B.

## EXPOSE DE MODES DE REALISATION PARTICULIERS

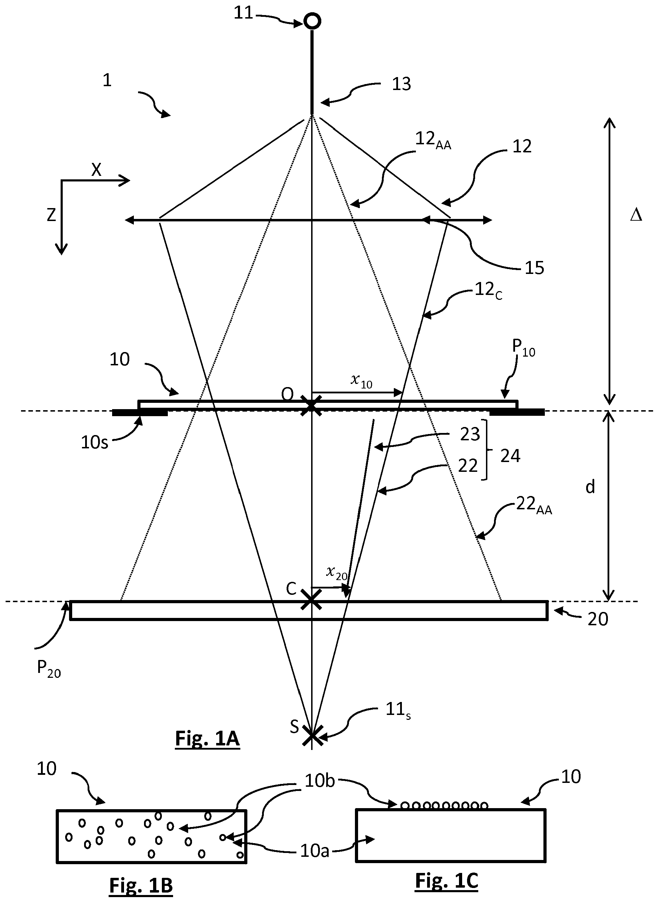

La figure 1A représente un exemple d'un dispositif 1 objet de l'invention, selon un premier mode de réalisation. Une source de lumière 11 est apte à produire une onde lumineuse 12, dite onde lumineuse d'émission, se propageant en direction d'un support 10s, selon un axe de propagation Z. L'onde lumineuse 12 est émise selon au moins une longueur d'onde $\lambda$. Le support 10s est apte à maintenir un objet 10 que l'on souhaite observer à l'aide du dispositif 1. Le support permet de disposer l'objet 10 de telle sorte que cet objet s'étende selon un plan $P_{10}$, dit plan objet.

L'objet 10 peut être un échantillon que l'on souhaite caractériser. Il peut comprendre un milieu 10a, solide ou liquide, transparent ou translucide à ladite longueur d'onde $\lambda$, dans lequel, où à la surface duquel, sont dispersées des particules 10b. Les figures 1B et 1C représentent des exemples de tels objets. Les particules 10b peuvent être des particules biologiques. Le milieu 10a peut être un milieu de culture, ou un liquide corporel. Par particule biologique, on entend une cellule, telle une cellule eucaryote, une bactérie ou autre microorganisme, un champignon, une spore, un virus...Le terme particules peut également désigner des microbilles, par exemple des microbilles métalliques, des microbilles de verre ou des microbilles organiques, couramment mises en oeuvre dans des protocoles biologiques. Il peut également s'agir de gouttelettes insolubles baignant dans un milieu liquide, par exemples des gouttelettes lipidiques dans une émulsion de type huile dans eau. Ainsi, le terme particule désigne à la fois des particules endogènes, initialement présentes dans l'objet examiné, et des particules exogènes, ajoutées à cet objet avant son observation. Ce terme peut également désigner des particules issues de l'agrégation d'autres particules présentes dans l'échantillon, par exemple un complexe formé par des anticorps avec des éléments portant un antigène. D'une façon générale, chaque particule a une taille avantageusement inférieure à 1 mm, voire inférieure à 500 $\mu$m, et de préférence une taille comprise entre 0.5 $\mu$m et 500 $\mu$m. De préférence, chaque particule a une taille supérieure à la longueur d'onde $\lambda$ d'émission de la source de lumière, cela de manière à entraîner un phénomène de diffraction comme décrit ci-après. Par taille de particule, on entend un diamètre ou une diagonale.

Le terme liquide corporel désigne un liquide issu d'un corps humain ou animal, de type sang, urine, sueur, liquide céphalorachidien, lymphe... Le terme milieu de culture désigne un milieu propice au développement d'une espèce biologique de type cellule, bactéries ou autres microorganismes.

L'objet peut également être une lame de tissu, ou lame d'anatomo-pathologie, comportant une fine épaisseur de tissu déposée sur une lame transparente. Il peut également s'agir d'une lame issue de l'application d'un protocole de coloration adapté à la recherche d'un microorganisme dans un échantillon, par exemple une coloration Gram ou Giemsa. Par fine épaisseur, on entend une épaisseur de préférence inférieure à 100 $\mu$m, et de préférence inférieure à 10 $\mu$m, typiquement quelques micromètres.

La distance $\Delta$ entre la source de lumière 11 et l'objet 10 est de préférence supérieure à 1 cm. Elle est de préférence comprise entre 2 et 30 cm. De préférence, la source de lumière, vue par l'objet, est considérée comme ponctuelle. Cela signifie que son diamètre (ou sa diagonale) est préférentiellement inférieur au dixième, mieux au centième de la distance entre l'objet et la source de lumière.

La source de lumière peut être une diode électroluminescente ou une source de lumière laser, telle une diode laser. Elle est de préférence ponctuelle. Dans l'exemple représenté, la source de lumière 11 est une diode électroluminescente, commercialisée par Innovation Optics sous la référence Lumibright 1700A-100-A-C0, dont la bande spectrale d'émission est centrée sur la longueur d'onde 450 nm. Cette diode électroluminescente est placée face à une première extrémité d'une fibre optique 13, dont la deuxième extrémité est placée face à l'objet 10, ou au support 10s maintenant l'objet. Le diamètre du cœur de la fibre optique est par exemple de 1 mm. Selon une variante, la fibre optique 13 peut être remplacée par un diaphragme, dont l'ouverture est typiquement comprise entre 5 $\mu$m et 1mm, de préférence entre 50 $\mu$m et 500 $\mu$m, par exemple 150 $\mu$m. Selon une autre variante, la fibre optique, est couplée à un objectif, permettant de former une image de son extrémité distale de façon à améliorer le caractère ponctuelle de la source. Ce cas de figure sera décrit par la suite. La fibre optique ou le diaphragme, couplés ou non à un objectif, constituent un filtre spatial 13 permettant de former une source de lumière ponctuelle lorsque la source de lumière 11 n'est pas jugée suffisamment ponctuelle.

Le dispositif comporte également un capteur d'image 20, apte à former une image $I$ selon un plan de détection $P_{20}$. Dans l'exemple représenté, il s'agit d'un capteur d'image matriciel comportant une matrice de pixels, de type CCD ou un CMOS. Les CMOS sont les capteurs d'image préférés car la taille des pixels est plus faible, ce qui permet d'acquérir des images dont la résolution spatiale est plus favorable. Dans cet exemple, le capteur d'image est un capteur CMOS commercialisé par Aptina sous la référence Micron MT9P031. Il s'agit d'un capteur CMOS monochrome, comprenant 2592 x 1944 pixels de 2.2 $\mu$m de côté, formant une surface de détection dont l'aire s'élève à 24.4 mm². Les capteurs d'image dont le pas inter pixel est inférieur à 3 $\mu$m sont préférés, afin d'améliorer la résolution spatiale de l'image. Le plan de détection $P_{20}$ s'étend de préférence perpendiculairement à l'axe de propagation Z de l'onde lumineuse d'émission 12. Le capteur d'image 20 peut comprendre un système de renvoi d'image de type miroir vers une matrice de pixels, auquel cas le plan de détection correspond au plan selon lequel s'étend le système de renvoi d'image. D'une façon générale, le plan de détection $P_{20}$ correspond au plan dans lequel une image est formée.

La distance d entre l'objet 10 et la matrice de pixels du capteur d'image 20 est, dans cet exemple, égale à 2 cm. D'une manière générale, et cela quel que soit le mode de réalisation, la distance d entre l'objet et les pixels du capteur d'image est préférentiellement comprise entre 50 $\mu$m et 5 cm.

On remarque l'absence d'optique de grandissement entre le capteur d'image 20 et l'objet 10. Cela n'empêche pas la présence éventuelle de microlentilles de focalisation au niveau de chaque pixel du capteur d'image 20, ces dernières n'ayant pas de fonction de grandissement de l'image.

Le dispositif 1 comporte un système optique 15, disposé entre la source de lumière 11 et l'objet 10. Sa fonction est de collecter l'onde d'émission 12 se propageant vers l'objet et de former une onde convergente $12_c$ se propageant jusqu'à l'objet, dite onde incidente convergente. Une partie de l'onde incidente convergente $12_c$ est alors transmise par l'objet, formant une onde transmise 22, et se propage jusqu'au capteur d'image 20. Par ailleurs, sous l'effet de l'exposition à l'onde incidente convergente $12_c$, l'objet peut générer une onde de diffraction 23 résultant de la diffraction, par l'objet, de l'onde incidente convergente $12_c$. Le capteur d'image est donc exposé à une onde, dite onde d'exposition 24, comprenant l'onde transmise 22 ainsi que l'onde de diffraction 23. La détection de l'onde d'exposition 24 par le capteur d'image permet la formation d'une image d'une partie de l'objet, cette partie correspondant au champ d'observation. Cette image représente une distribution spatiale en amplitude de l'onde d'exposition 24 dans le plan de détection $P_{20}$. Elle peut notamment comporter des figures de diffraction résultant de l'interférence entre l'onde transmise 22 et l'onde de diffraction 23. Ces figures peuvent notamment prendre la forme d'un noyau central, autour duquel s'étendent des anneaux concentriques. Il s'agit des figures de diffraction décrites dans la partie relative à l'art antérieur.

Lorsque l'objet comporte différentes particules 10b, l'onde de diffraction comporte une pluralité d'ondes de diffractions élémentaires, chaque onde de diffraction élémentaire résultant de la diffraction de l'onde convergente incidente $12_c$ par lesdites particules. L'apparition de ces ondes de diffraction est favorisée lorsque la taille desdites particules est de l'ordre de ou supérieur à la longueur d'onde $\lambda$ émise par la source de lumière 11.

Le système optique 15 permet la formation d'une image secondaire de la source $11_s$, en deçà ou au-delà de l'objet. Les termes en deçà et au-delà s'entendent selon l'axe de propagation de l'onde d'émission 12. Ainsi, par au-delà de l'objet, on entend dans un demi-espace délimité par le plan $P_{10}$, passant par le support apte à maintenir l'objet 10 et perpendiculaire à l'axe de propagation Z, ce demi-espace comportant le capteur d'image 20 (donc ne comportant pas la source 11). Dans l'exemple représenté sur la figure 1A, la source secondaire $11_s$ est positionnée au-delà du capteur d'image 20, dans le prolongement de l'onde incidente convergente $12_c$. Il s'agit donc d'une source virtuelle. Par au-delà du capteur, on entend dans un demi-espace délimité par le plan de détection $P_{20}$, et ne comportant pas la source 11.

Sur la figure 1A, les positions de l'objet 10, du capteur d'image 20 et de la source secondaire $11_s$, sont respectivement O, C et S. Soit $g_X$, le grandissement transversal de l'objet, selon un axe X perpendiculaire à l'axe de propagation Z,

$$g_X = \frac{x_{20}}{x_{10}} = \frac{\overline{SO} + \overline{OC}}{\overline{SO}} \,(1)$$

où

- $x_{10}$ désigne une dimension dans le plan de l'objet $P_{10}$,
- $x_{20}$ désigne la même dimension dans le plan de détection $P_{20}$, c'est-à-dire dans l'image acquise par le capteur d'image,
- l'opérateur désigne la valeur algébrique.

Le terme grandissement transversal désigne un grandissement selon un axe perpendiculaire à l'axe de propagation de la lumière. Dans la suite du texte, on utilise indifféremment les termes grandissement transversal ou grandissement.

Selon la configuration représentée sur la figure 1, le grandissement transversal est inférieur à 1. Autrement dit, les dimensions de l'objet imagé sont plus petites dans le plan de détection $P_{20}$ que dans le plan de l'objet $P_{10}$. Il est donc possible d'effectuer une image d'un objet dont les dimensions, dans le plan de l'objet $P_{10}$, sont supérieures aux dimensions du capteur d'image 20. Plus la source secondaire $11_s$ s'éloigne du capteur d'image (et de l'objet), plus le grandissement tend vers 1, tout en étant inférieur à 1, d'où la notation $g_X \rightarrow 1^-$. Lorsque la source secondaire $11_s$ se rapproche du capteur d'image, le grandissement tend vers 0, tout en étant positif : $g_X \rightarrow 0^+$. Le terme grandissement positif désigne le fait qu'il n'y a pas d'inversion entre l'image *I* formée sur le capteur d'image 20 et l'objet 10.

Sur cette figure est également représentée une onde incidente $12_{AA}$ selon l'art antérieur. L'onde incidente est divergente de la source de lumière jusqu'à l'objet, à partir duquel une onde transmise $22_{AA}$, également divergente, se propage jusqu'au capteur d'image 20. Le grandissement transversal est alors supérieur à 1.

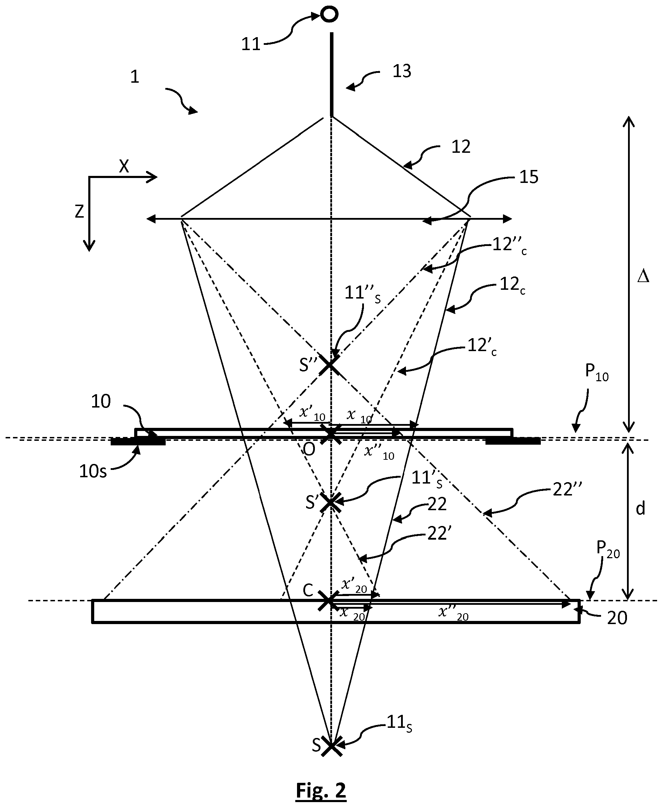

La figure 2 représente trois configurations, selon lesquelles la source secondaire $11_s$, $11'_s$, $11''_s$ occupe respectivement les positions S, S' et S''. La position S de la source secondaire $11_s$ est celle déjà décrite en lien avec la figure 1. On a également représenté, pour chacune de ces configurations :

- l'onde incidente à l'objet $12_c$, $12'_c$ et $12''_c$, se propageant entre le système optique et l'objet, ainsi que l'onde transmise par l'objet 22, 22', 22'', se propageant vers le capteur d'image 20 ;
- une dimension transversale $x_{10}, x'_{10}, x''_{10}$ de l'objet dans le plan de l'objet $P_{10}$;
- ladite dimension transversale $x_{20}, x'_{20}, x''_{20}$ de l'objet dans le plan de l'objet $P_{20}$.

En se basant sur l'expression (1), on peut déterminer le grandissement transversal de chacune de ces configurations.

- lorsque la position de la source secondaire, désignée sur la figure 2 par S', est située entre le capteur d'image 20 et l'objet 10, le grandissement est négatif. La valeur négative du grandissement indique une inversion de l'objet sur l'image. Le grandissement tend vers 0 lorsque la source secondaire se rapproche du capteur d'image et tend vers -∞ lorsque la source secondaire se rapproche de l'objet. Le cas où la source secondaire est située entre le capteur 20 et l'objet 10, à égale distance de l'un et de l'autre correspond à une configuration selon laquelle $\overline{S'O}$ = $\overline{OC}$, donc $g_X$ = -1.
- lorsque la position de la source secondaire, désignée sur la figure 2 par S'', est située entre le système optique 15 et l'objet 10, le grandissement est positif, et supérieur à 1 : il tend vers +∞ lorsque la source secondaire se rapproche de l'objet et tend vers 1 au fur et à mesure que la source secondaire s'éloigne de l'objet. On se retrouve alors dans une configuration proche de l'art antérieur. Dans ce cas, l'onde incidente $12''c$ atteignant l'objet est divergente.

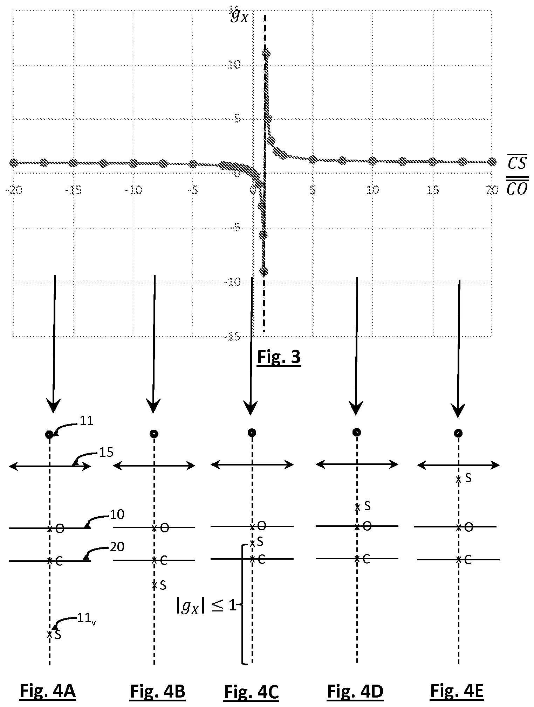

La figure 3 représente l'évolution du grandissement transversal en fonction de la position S de la source secondaire, selon l'axe de propagation de l'onde incidente. Sur cette figure, l'axe des abscisses représente le ratio $\frac{\overline{CS}}{\overline{CO}}$ et l'axe des ordonnées représente le grandissement transversal.

On observe que :

i) lorsque la source secondaire $11_s$ est placée plus proche du capteur d'image 20 que de l'objet 10, $(\frac{\overline{CS}}{\overline{CO}} < \frac{1}{2})$, la valeur absolue du grandissement $g_X$ est strictement inférieur à 1: $|g_X|$ < 1; le grandissement est négatif lorsque la source secondaire est disposée entre le capteur d'image 20 et l'objet 10, et positif lorsque la source secondaire est située au-delà du capteur d'image ;

ii) lorsque la source secondaire $11_s$ est placée plus proche de l'objet 10 que du capteur d'image 20, $(\frac{\overline{CS}}{\overline{CO}} > \frac{1}{2})$, valeur absolue du grandissement $g_X$ est strictement supérieur à 1 : $|g_X|$ > 1 ;

iii) lorsque la source secondaire $11_s$ est placée entre l'objet et le capteur d'image, $(0 < \frac{\overline{CS}}{\overline{CO}} < 1)$, le grandissement $g_X$ est négatif, ce qui correspond à une inversion de l'image de l'objet ;

iv) lorsque la source secondaire $11_s$ est placée au-delà du capteur d'image, c'est-à-dire dans un demi espace délimité par le plan de détection $P_{20}$ et ne comprenant pas l'objet 10, (ou la source 11), $(\frac{\overline{CS}}{\overline{CO}} < 0),|$ le grandissement $g_X$ est strictement compris entre 0 et 1 : 0 < $g_X$ < 1 ;

v) lorsque la source secondaire $11_s$ est placée entre la source 11 et l'objet 10, $(\frac{\overline{CS}}{\overline{CO}} > 1)$, le grandissement est strictement supérieur à 1.

La configuration selon laquelle la source secondaire est dans le plan de l'objet, c'est-à-dire $\frac{\overline{CS}}{\overline{CO}}$ = 1, correspond à une configuration selon laquelle le grandissement est infini. Toutefois, dans cette configuration, la partie de l'objet éclairée par l'onde incidente convergente $12c$, est alors infiniment petite, ce qui la rend sans intérêt. Lorsque la source secondaire se rapproche de l'objet, le grandissement tend vers :

- -∞ si la source secondaire est située au-delà de l'objet, c'est-à-dire $\frac{\overline{CS}}{\overline{CO}} \rightarrow 1^-$ ;
- +∞ si la source secondaire est située en-deçà de l'objet, c'est-à-dire $\frac{\overline{CS}}{\overline{CO}} \rightarrow 1^+$.

La configuration selon laquelle la source secondaire $11_s$ est dans le plan de détection $P_{20}$, c'est-à-dire

$$\frac{\overline{CS}}{\overline{CO}} = 0$$

correspond à une configuration selon laquelle le grandissement est nul. Cette configuration ne présente pas d'intérêt.

Les figures 4A à 4E représentent des configurations liées à des parties particulières de la courbe de la figure 3 :

- les figures 4A et 4B représentent deux configurations dans lesquelles le grandissement est positif et inférieur à 1, en tendant vers 1 au fur et à mesure que la source secondaire $11_s$ s'éloigne du capteur d'image 20;
- la figure 4C représente le cas limite où le grandissement est égal à -1, la source secondaire $11_s$ étant située à égale distance de l'objet 10 et du capteur d'image 20: $\frac{\overline{CS}}{\overline{CO}} = \frac{1}{2}$;
- les figures 4D et 4E représentent deux configurations dans lesquelles le grandissement est positif, et tend vers 1 au fur et à mesure que la source secondaire $11_s$ s'éloigne de l'objet 10.

Ainsi, on obtient un grandissement dont la valeur absolue est inférieure à 1 dans les configurations i) ou iv). Cela est dû au fait que l'onde incidente 12c à l'objet 10 est convergente, et que la source secondaire $11_s$ est plus proche du capteur d'image 20 que de l'objet 10. Dans ce type de configuration, sous réserve d'un champ éclairé sur l'objet suffisamment important, le champ d'observation du capteur d'image est augmenté par rapport à l'art antérieur. L'accolade représentée sur la figure 4C représente les positions de la source secondaire correspondant à ce cas de figure.

Par ailleurs, en interposant un système optique 15 entre la source de lumière 11 et l'objet 10, il est possible de faire varier la position de la source de lumière secondaire $11_s$, par exemple en utilisant un système optique 15 de focale variable ou en le déplaçant. Le grandissement $g_X$ peut être modulé en fonction d'un paramètre caractérisant le système optique 15, par exemple sa distance focale ou sa position selon l'axe de propagation Z. Cela permet l'observation d'un objet en alternant des images correspondant à un grandissement inférieur à 1, d'où un champ d'observation élevé, puis des images correspondant à un grandissement supérieur à 1, afin de mieux visualiser des détails, par effet de zoom. Bien que le dispositif ne comporte pas d'optique de grandissement entre la source et l'objet, l'invention permet de moduler le grandissement d'une image.

L'image obtenue sur le capteur d'image 20 peut être exploitée telle qu'elle. En effet, on a montré que certaines particules produisent des figures de diffraction dont la morphologie leur est spécifique. Il est ainsi possible de dénombrer les particules, et de les identifier, comme décrit dans le document WO2008090330, cité en référence à l'art antérieur. En variante, à partir de cette image, on peut appliquer un algorithme de reconstruction, de façon à obtenir une image reconstruite dans un plan parallèle au plan de détection $P_{20}$, dit plan de reconstruction $P_r$, placé à une distance connue $d_r$ du plan de détection. Il s'agit alors d'appliquer les principes bien connus de la reconstruction holographique numérique, décrits par exemple dans la publication Ryle et al, « Digital in-line holography of biological specimens », Proc. Of SPIE Vol.6311 (2006), en effectuant un produit de convolution entre l'intensité I(x,y) de l'image mesurée par chaque pixel $20_{(x,y)}$ du capteur d'image 20, et un opérateur de propagation h(x,y,z). L'opérateur de propagation h(x,y,z) a pour fonction de décrire la propagation de la lumière entre le capteur d'image 20 et un point de coordonnées (x,y,z). Les coordonnées (x,y) désignent des coordonnées selon le plan de détection $P_{20}$, tandis que la coordonnée z désigne une coordonnée selon l'axe de propagation Z. Il est possible de reconstruire une expression complexe I*(x,y,z), de l'onde d'exposition 24 en tout point de coordonnées (x,y,z) de l'espace, et en particulier dans un plan situé à une distance de reconstruction $d_r$ du capteur d'image, ayant pour équation $z = d_r$. On peut alors déterminer l'amplitude u(x,y,z) et la phase $\varphi$ (x,y,z) de cette onde d'exposition 24 à la distance de reconstruction $d_r$, avec :

$$u(x,y,z) = abs\ [I^*(x,y,z=d_r)]\ ,$$

$$\varphi(x,y,z) = arg\ [I^*(x,y,z=d_r)],$$

Les opérateurs abs et arg désignant respectivement le module et l'argument.

Dans cet exemple, le plan de détection $P_{20}$, dans lequel l'image *I* est formée, est affecté d'une coordonnée z = 0. L'opérateur de propagation peut être tel que :

$$h(x,y,z) = \frac{z}{2\pi r}\left(1 - j2\pi\frac{r}{\lambda}\right)\frac{e^{(j2\pi\frac{r}{\lambda})}}{r^2}, \ (2)$$

avec $r = \sqrt{x^2 + y^2 + z^2}$, et λ désignant la longueur d'onde.

Un tel opérateur a été décrit dans la publication Marathay, A « On the usual approximation used in the Rayleigh-Sommerfeld diffraction theory », J. Opt. Soc. Am. A, Vol. 21, N°. 4, April 2004. D'autres opérateurs de propagation sont utilisables, par exemple un opérateur basé sur la fonction de Fresnel-Helmholtz, telle que :

$$h(x,y,z) = \frac{1}{j\lambda z}e^{j2\pi\frac{z}{\lambda}}\exp(j\pi\frac{(x+y)^2}{\lambda z})\ (2').$$

Essais expérimentaux.

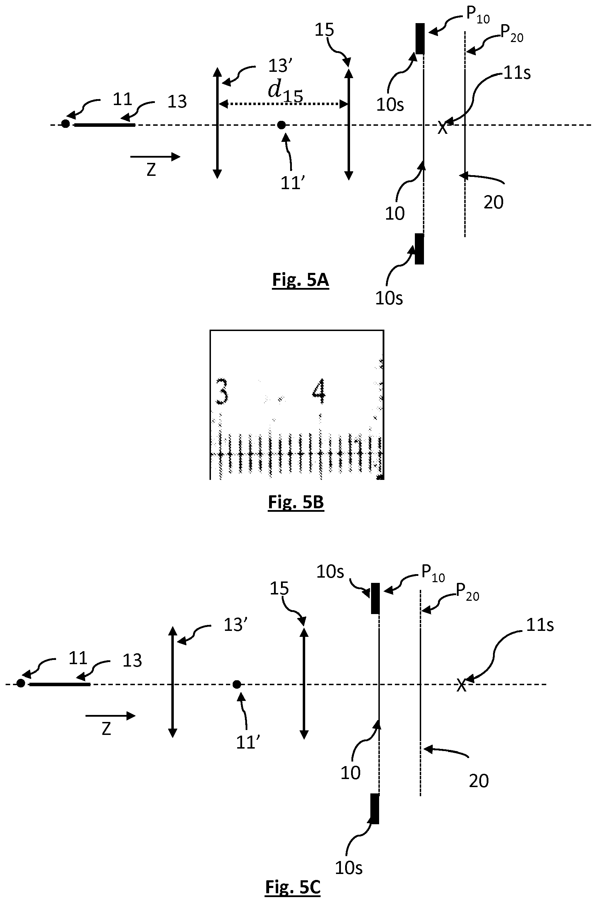

Des essais expérimentaux ont été réalisés en utilisant une configuration telle que représentée sur les figures 5A et 5B. La source de lumière 11 est couplée à une fibre optique 13, dont une extrémité proximale est placée face à la source ponctuelle est dont une extrémité distale forme une source de lumière ponctuelle. Cette extrémité distale est placée à une grande distance, de façon à être considérée comme placée à l'infini d'un objectif 13', apte à former, en son foyer, une image réduite de l'extrémité distale de la fibre optique. Par grande distance, on entend ici au moins 10 fois, voire 100 fois la distance focale de l'objectif. Dans cet exemple, l'objectif 13' est objectif de marque Motic, de référence EF-N Plan 40X, d'ouverture numérique 0.65, et de distance focale $f_1$ = 4.6 mm. L'association de la fibre optique et de l'objectif forme un filtre spatial permettant de former une source de lumière ponctuelle 11' au foyer de l'objectif 13. Alternativement, un diaphragme pourrait être utilisé à la place de la fibre optique ou à la place de l'ensemble fibre optique + objectif.

Le dispositif comporte un système optique 15, disposé entre la source de lumière 11 et l'objet 10 : il s'agit d'une lentille de tube de distance focale 50 mm (référence AC254-050-A, fabricant Thorlabs). Ce système est apte à conjuguer la source de lumière 11 à une source secondaire $11_s$, par l'intermédiaire de la source ponctuelle 11'. Ce système optique est agencé de telle sorte que la source secondaire $11_s$ est positionnée entre l'objet 10 et le capteur d'image 20, comme représenté sur la figure 5A.

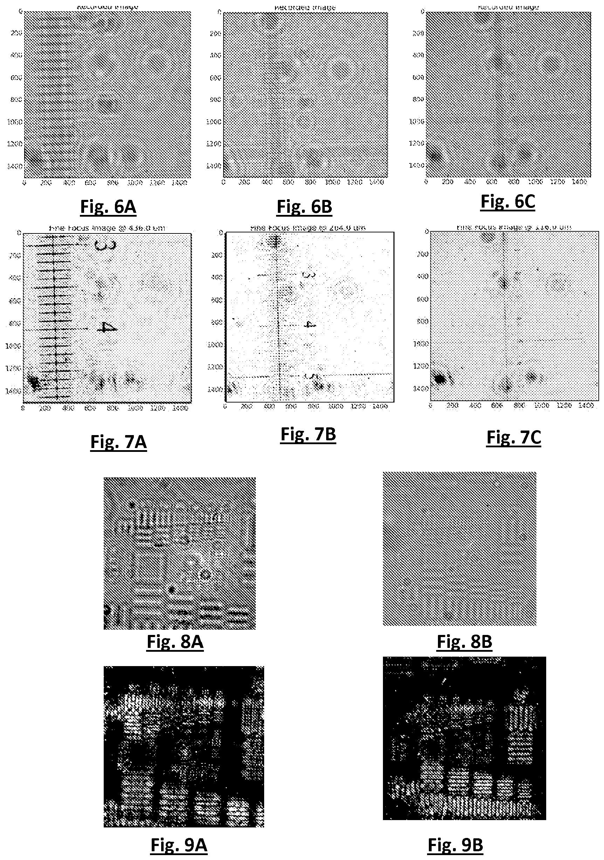

On a fait varier la distance $d_{15}$ entre le système optique 15 et l'objectif 13', cette distance étant appelée distance inter-optique, de façon à déplacer la position S de la source secondaire $11_s$ selon l'axe Z de propagation de la lumière. L'objet 10 comporte une mire transparente, représentée sur la figure 5B, présentant des graduations opaques espacées les unes des autres selon une distance égale à 100 $\mu$m. L'objet 10 est disposé à une distance de 2 cm du plan de détection $P_{20}$ du capteur d'image CMOS 20 préalablement décrit. Les figures 6A, 6B et 6C représentent des images obtenues sur le capteur d'image. Chaque image comporte des figures, dites figures de diffraction, résultant de l'interférence entre une onde de diffraction 23, produite par des éléments diffractants de l'objet, et l'onde 22 transmise par l'objet. Les éléments diffractants de l'objet peuvent être par exemple les graduations opaques de la mire. Ainsi, comme précédemment décrit, le capteur d'image 20 est exposé à une onde d'exposition 24, comportant l'onde 22 transmise par l'objet ainsi qu'une onde 23 résultant de la diffraction, par l'objet, de l'onde convergente 12c, incidente à l'objet. Les images 6A, 6B et 6C représentent une distribution spatiale de l'amplitude de l'onde d'exposition 24 dans le plan de détection $P_{20}$.

On a appliqué des algorithmes de reconstruction holographique à chacune des images 6A, 6B et 6C.

L'algorithme de reconstruction holographique mis en œuvre est basé sur l'opérateur décrit par l'expression (2), en adoptant une distance de reconstruction z = -2 cm, la coordonnée z = 0 correspondant au plan de détection $P_{20}$. Les figures 7A, 7B et 7C représentent les résultats des reconstructions respectivement obtenues sur la base des images 6A, 6B et 6C. Les algorithmes de reconstruction ne prennent pas en compte le grandissement induit par le système optique 15. En effet, ils sont basés sur l'hypothèse d'une propagation d'une onde plane, se propageant parallèlement à l'axe de propagation. Aussi, les images reconstruites présentent le même grandissement que les images obtenues sur le plan de détection. On remarque que les images reconstruites dont clairement apparaître les graduations, ce qui atteste de la bonne qualité de la reconstruction.

La distance entre deux pixels adjacents étant connue, il est alors possible de mesurer le grandissement transversal généré par le système optique, selon l'expression :

$$g_X = \frac{\delta_{pix} \times n_{pix}}{\delta} \ (3),$$

où :

- $\delta$ représente la distance entre un nombre prédéterminé, ici égal à 10, de graduations successives de la mire ;
- $\delta_{pix}$ représente la distance entre deux pixels adjacents du capteur d'image 20 ;
- $n_{pix}$ représente le nombre de pixels entre ledit nombre prédéterminé de graduations successives sur l'image reconstruite.

Les figures 6A et 7A correspondent à une distance inter-optique nulle, le système optique 15 étant disposé contre l'objectif 13'. La source secondaire 11s est alors située, entre l'objet et le capteur d'image, à une distance de 12.6 mm du capteur d'image et à une distance de 7.4 mm de l'objet, donc plus proche de l'objet que du capteur. Le grandissement est négatif, supérieur à 1. Son estimation selon l'expression (3) indique $g_X$ = -1,7.

Les figures 6B et 7B correspondent à une distance inter-optique de 29,7 mm. La source secondaire 11s est alors située entre l'objet 10 et le capteur d'image 20, à égale distance de l'un et de l'autre. On est alors dans une configuration telle que représentée sur la figure 4C. Le grandissement est négatif, et sa valeur absolue est égale à 1. Autrement dit, $g_X$ =-1.

Les figures 6C et 7C correspondent à une distance inter-optique de 120 mm. La source secondaire 11s est alors située entre l'objet 10 et le capteur d'image 20, à une distance de 7.2 mm du capteur d'image, donc plus poche du capteur d'image que de l'objet. Le grandissement est négatif, et sa valeur a été estimée à -0.57.

Ces essais démontrent la capacité du dispositif à obtenir une image exploitable d'un objet dont la taille est supérieure à la taille du capteur, du fait d'un grandissement dont la valeur absolue est inférieure à 1. Ils démontrent également la possibilité de moduler simplement la position de la source secondaire 11s, et, par conséquent, de passer d'un grandissement supérieur à 1 à un grandissement inférieur à 1, sans modifier la position de la source, de l'objet ainsi que du capteur d'image, et cela bien qu'aucune optique de grandissement ne soit disposée entre l'objet et le capteur d'image. Ainsi, tout en restant dans le domaine de l'imagerie sans lentille, le grandissement de l'image de l'objet peut être inférieur à 1, et peut varier.

Dans un autre essai, dont le dispositif est représenté sur la figure 5C, la lentille 15 a été remplacée par une lentille à focale variable de marque Optotune (reference EL-10-30-VIS-LD). La distance focale d'une telle lentille peut être pilotée par l'application d'un courant électrique. La mire a été remplacée par une mire dont les graduations ne sont pas opaques, mais formées de sillons gravés par une gravure laser. Chaque graduation constitue un objet dit « de phase » entraînant une diffraction de l'onde convergente 12c, incidente à l'objet. La lentille est agencée de telle sorte que la source secondaire $11_s$ est positionnée au-delà du capteur d'image 20.

Les figures 8A et 8B représentent des images obtenues respectivement :

- lorsque le courant est nul : le grandissement est positif, la source secondaire $11_s$ étant située au-delà du capteur, à une distance de 21.8 mm de ce dernier ;
- lorsque l'intensité du courant s'élève à 292 mA : le grandissement est positif, la source secondaire $11_s$ étant située au-delà du capteur d'image, à une distance de 12.2 mm de ce dernier.

Les figures 9A et 9B représentent les images reconstruites respectivement à partir des figures 8A et 8B, dans le plan objet, c'est-à-dire en adoptant une distance de reconstruction de 2 cm. On peut alors estimer le grandissement dans chacune de ces configurations, ce dernier étant respectivement estimé à 0.52 et 0.38 d'après les figures 9A et 9B. Ces essais illustrent les configurations représentées sur les figures 4A et 4B, et confirment le fait que plus la source secondaire se rapproche du capteur d'image, plus le grandissement diminue.

Cela démontre à nouveau la possibilité de moduler le grandissement d'une image dans une configuration de type imagerie sans lentille, c'est-à-dire sans optique de grandissement disposé entre l'objet et le capteur.

L'invention pourra être utilisée pour l'observation d'échantillons, par exemple des échantillons biologiques, ou dans d'autres domaines, par exemple dans le domaine de l'industrie agroalimentaire.

**Revendications**

1. Dispositif (1) d'observation d'un objet par imagerie sans lentille comportant:

   - une source de lumière (11), apte à générer une onde lumineuse, dite onde d'émission (12), se propageant selon un axe de propagation (Z) ;
   - un capteur d'image (20) ;
   - un support ($10_s$), apte à maintenir un objet (10), interposé entre le capteur d'image et la source de lumière, de telle sorte que le capteur d'image (20) est apte à former une image dudit objet maintenu sur le support ;
   - un système optique (15), disposé entre la source de lumière (11) et le support ($10_s$), apte à former, à partir de ladite onde d'émission, une onde incidente convergente ($12_C$), se propageant dudit système optique (15) jusqu'au support ($10_s$) ;
   - le support ($10_s$) définissant un plan, dit plan objet ($P_{10}$), perpendiculaire à l'axe de propagation (Z) et passant par le support, ledit système optique (15) étant apte à conjuguer ladite source de lumière (11) avec une source secondaire ($11_s$), située dans un demi espace délimité par ledit plan objet ($P_{10}$) et comportant le capteur d'image (20) ;

   le dispositif étant **caractérisé en ce que** :

   - le système optique (15) est configuré de telle sorte que la source secondaire (11s) est située plus proche du capteur d'image (20) que du support ($10_s$), de telle sorte que l'image de l'objet, maintenu par le support, sur le capteur d'image soit affectée d'un grandissement transversal inférieur à 1.

2. Dispositif d'observation d'un objet selon la revendication 1, dans lequel ledit système optique (15) est configuré de telle sorte que la source secondaire ($11_s$) est située entre le support ($10_s$) et le capteur d'image (20).

3. Dispositif d'observation d'un objet selon la revendication 1, dans lequel le capteur d'image s'étend selon un plan de détection ($P_{20}$), ledit système optique (15) étant configuré telle sorte que la source secondaire (11s) est située dans un demi espace délimité par le plan de détection ($P_{20}$) et ne comportant pas la source de lumière.

4. Dispositif d'observation d'un objet selon l'une quelconque des revendications précédentes, dans lequel le système optique (15) est paramétré selon un paramètre, de telle sorte que la position de la source secondaire (11s) est ajustable en fonction dudit paramètre.

**5.** Dispositif d'observation d'un objet selon la revendication 4, dans lequel le paramètre est une position du système optique selon l'axe de propagation (Z) ou une distance focale du système optique.

**6.** Procédé d'observation d'un objet (10) par imagerie sans lentille comportant les étapes suivantes :

a) disposer l'objet (10) entre une source de lumière (11) et un capteur d'image (20), la source de lumière étant couplée à un système optique (15), placé entre la source de lumière et l'objet ;
b) activer la source de lumière, la source de lumière émettant alors une onde lumineuse dite onde d'émission (12) se propageant jusqu'au système optique, ce dernier formant une onde lumineuse incidente convergente ($12_C$) se propageant jusqu'à l'objet ;
c) acquérir, à l'aide du capteur d'image (20) une image de l'objet ainsi exposé à ladite onde incidente convergente ($12_C$) ;

- l'onde lumineuse étant émise selon un axe de propagation (Z), l'objet définissant un plan, dit plan objet ($P_{10}$), passant par l'objet (10) et perpendiculaire audit axe de propagation (Z), de telle sorte que lors de l'étape b), le système optique (15) conjugue la source de lumière (11) avec une source de lumière dite secondaire ($11_s$), cette dernière étant située dans un demi espace délimité par le plan objet ($P_{10}$) et comportant le capteur d'image (20) ;

le procédé étant **caractérisé en ce que** :

- la source secondaire est située plus proche du capteur d'image (20) que de l'objet (10), de telle sorte que l'image de l'objet sur le capteur d'image soit affectée d'un grandissement transversal inférieur à 1.

**7.** Procédé d'observation selon la revendication 6, dans lequel la source de lumière secondaire est située entre l'objet (10) et le capteur d'image (20).

**8.** Procédé d'observation selon la revendication 6, dans lequel le capteur d'image (20) s'étend selon un plan, dit plan de détection ($P_{20}$), et dans lequel ladite source de lumière secondaire ($11_s$) est située dans un demi espace délimité par ledit plan de détection ($P_{20}$) et ne comportant pas ladite source de lumière (11).

**9.** Procédé d'observation selon l'une quelconque des revendications 6 à 8, dans lequel l'étape b) comporte également une étape d'ajustement de la position de la source secondaire ($11_s$) en fonction d'un paramètre du système optique.

**10.** Procédé d'observation selon la revendication 9, dans lequel le paramètre du système optique est choisi parmi :

- une distance focale dudit système optique ;
- une position dudit système optique selon ledit axe de propagation (Z).

**11.** Procédé d'observation selon l'une quelconque des revendications 6 à 10, dans lequel lors de l'étape c) le capteur d'image (20) est exposé à une onde d'exposition (24) comportant :

- une onde transmise par l'objet (22), résultant de la transmission, par l'objet, de l'onde incidente convergente ($12_C$) ;
- une onde de diffraction (23) résultant de la diffraction, par l'objet, de l'onde incidente convergente ($12_C$).

**12.** Procédé d'observation selon l'une quelconque des revendications 6 à 11, comportant une étape d) d'application d'un algorithme de reconstruction holographique à l'image formée sur le capteur d'image (20) lors de l'étape c).

**13.** Procédé d'observation selon l'une quelconque des revendications 6 à 12, dans lequel, la source de lumière (11) émettant ladite onde lumineuse d'émission (12) selon une longueur d'onde ($\lambda$), l'objet (10) est transparent ou translucide à ladite longueur d'onde ($\lambda$).

**14.** Procédé d'observation selon l'une quelconque des revendications 6 à 13, dans lequel la source de lumière émettant (11) ladite onde lumineuse d'émission (12) selon une longueur d'onde ($\lambda$), l'objet comporte des particules (10b) dispersées dans ou à la surface d'un milieu (10a), ce dernier étant transparent ou translucide à ladite longueur d'onde.

**Patentansprüche**

**1.** Vorrichtung (1) zur Beobachtung eines Objekts mittels linsenfreier Abbildung, die Folgendes umfasst:

- eine Lichtquelle (11), die fähig ist, eine Lichtwelle, als emittierte Welle (12) bezeichnet, zu generieren, die sich gemäß einer Ausbreitungsachse (Z) ausbreitet;
- einen Bildsensor (20);
- einen Träger ($10_s$), der fähig ist, ein Objekt (10), das zwischen dem Bildsensor und der Lichtquelle eingefügt ist, zu halten, sodass der Bildsensor (20) fähig ist, ein Bild des auf dem Träger gehaltenen Objekts zu erzeugen;

- ein optisches System (15), das zwischen der Lichtquelle (11) und dem Träger ($10_s$) angeordnet ist und fähig ist, anhand der emittierten Welle eine konvergierende einfallende Welle ($12_C$) zu erzeugen, die sich von dem optischen System (15) bis zu dem Träger ($10_s$) ausbreitet;

- wobei der Träger ($10_s$) eine Ebene, als Objektebene ($P_{10}$) bezeichnet, definiert, die zu der Ausbreitungsachse (Z) senkrecht ist und durch den Träger verläuft, wobei das optische System (15) fähig ist, die Lichtquelle (11) mit einer sekundären Quelle ($11_s$) zu vereinen, die sich in einem Halbraum, der durch die Objektebene ($P_{10}$) begrenzt wird und den Bildsensor (20) umfasst, befindet;

wobei die Vorrichtung **dadurch gekennzeichnet ist, dass**:

- das optische System (15) so konfiguriert ist, dass sich die sekundäre Quelle ($11_s$) näher an dem Bildsensor (20) als an dem Träger ($10_s$) befindet, sodass das Bild des Objekts, das durch den Träger gehalten wird, auf dem Bildsensor einer Transversalvergrößerung kleiner 1 unterliegt.

2. Vorrichtung zur Beobachtung eines Objekts nach Anspruch 1, wobei das optische System (15) so konfiguriert ist, dass sich die sekundäre Quelle ($11_s$) zwischen dem Träger ($10_s$) und dem Bildsensor (20) befindet.

3. Vorrichtung zur Beobachtung eines Objekts nach Anspruch 1, wobei sich der Bildsensor gemäß einer Detektionsebene ($P_{20}$) erstreckt, wobei das optische System (15) so konfiguriert ist, dass sich die sekundäre Quelle ($11_s$) in einem Halbraum, der durch die Detektionsebene ($P_{20}$) begrenzt wird und die Lichtquelle nicht umfasst, befindet.

4. Vorrichtung zur Beobachtung eines Objekts nach einem der vorhergehenden Ansprüche, wobei das optische System (15) gemäß einem Parameter parametriert wird, sodass die Position der sekundären Quelle ($11_s$) in Abhängigkeit von dem Parameter anpassbar ist.

5. Vorrichtung zur Beobachtung eines Objekts nach Anspruch 4, wobei der Parameter eine Position des optischen Systems gemäß der Ausbreitungsachse (Z) oder eine Brennweite des optischen Systems ist.

6. Verfahren zur Beobachtung eines Objekts (10) mittels linsenfreier Abbildung, das die folgenden Schritte umfasst:

a) Anordnen des Objekts (10) zwischen einer Lichtquelle (11) und einem Bildsensor (20), wobei die Lichtquelle mit einem optischen System (15) gekoppelt ist, das zwischen der Lichtquelle und dem Objekt platziert ist;

b) Aktivieren der Lichtquelle, wobei die Lichtquelle dann eine Lichtwelle, als emittierte Welle (12) bezeichnet, emittiert, die sich bis zu dem optischen System ausbreitet, wobei dieses letztere eine konvergierende einfallende Lichtwelle (12c) erzeugt, die sich bis zu dem Objekt ausbreitet;

c) Erfassen, mit Hilfe des Bildsensors (20), eines Bildes des Objekts, das auf diese Weise durch die konvergierende einfallende Welle (12c) belichtet wird;

- wobei die Lichtwelle gemäß einer Ausbreitungsachse (Z) emittiert wird, wobei das Objekt eine Ebene, als Objektebene ($P_{10}$) bezeichnet, definiert, die durch das Objekt (10) verläuft und senkrecht zu der Ausbreitungsachse (Z) ist, sodass während des Schritts b) das optische System (15) die Lichtquelle (11) mit einer Lichtquelle, die als sekundär ($11_s$) bezeichnet wird, vereint, wobei sich diese letztere in einem Halbraum, der durch die Objektebene ($P_{10}$) begrenzt wird und den Bildsensor (20) umfasst, befindet;

wobei das Verfahren **dadurch gekennzeichnet ist, dass**:

- sich die sekundäre Quelle näher an dem Bildsensor (20) als an dem Objekt (10) befindet, sodass das Bild des Objekts auf dem Bildsensor einer Transversalvergrößerung kleiner 1 unterliegt.

7. Verfahren zur Beobachtung nach Anspruch 6, wobei sich die sekundäre Lichtquelle zwischen dem Objekt (10) und dem Bildsensor (20) befindet.

8. Verfahren zur Beobachtung nach Anspruch 6, wobei sich der Bildsensor (20) gemäß einer Ebene, als Detektionsebene ($P_{20}$) bezeichnet, erstreckt und wobei sich die sekundäre Lichtquelle ($11_s$) in einem Halbraum, der durch die Detektionsebene ($P_{20}$) begrenzt wird und die Lichtquelle (11) nicht umfasst, befindet.

9. Verfahren zur Beobachtung nach einem der Ansprüche 6 bis 8, wobei der Schritt b) ebenfalls einen Schritt des Anpassens der Position der sekundären Quelle ($11_s$) in Abhängigkeit von einem Parameter des optischen Systems umfasst.

**10.** Verfahren zur Beobachtung nach Anspruch 9, wobei der Parameter des optischen Systems aus einem von Folgendem ausgewählt ist:

- einer Brennweite des optischen Systems;
- einer Position des optischen Systems gemäß der Ausbreitungsachse (Z).

**11.** Verfahren zur Beobachtung nach einem der Ansprüche 6 bis 10, wobei während des Schritts c) der Bildsensor (20) durch eine Belichtungswelle (24) belichtet wird, die Folgendes umfasst:

- eine durch das Objekt übertragene Welle (22), die aus der Übertragung der konvergierenden einfallenden Welle $(12_c)$ durch das Objekt resultiert;
- eine Diffraktionswelle (23), die aus der Diffraktion der konvergierenden einfallenden Welle $(12_c)$ durch das Objekt resultiert.

**12.** Verfahren zur Beobachtung nach einem der Ansprüche 6 bis 11, das einen Schritt d) des Anwendens eines Algorithmus zur holographischen Rekonstruktion auf das Bild, das während des Schritts c) auf dem Bildsensor (20) erzeugt wird, umfasst.

**13.** Verfahren zur Beobachtung nach einem der Ansprüche 6 bis 12, wobei, wenn die Lichtquelle (11) die emittierte Lichtwelle (12) gemäß einer Wellenlänge ($\lambda$) emittiert, das Objekt (10) für die Wellenlänge ($\lambda$) transparent oder transluzent ist.

**14.** Verfahren zur Beobachtung nach einem der Ansprüche 6 bis 13, wobei, wenn die Lichtquelle die emittierte Lichtwelle (12) gemäß einer Wellenlänge ($\lambda$) emittiert (11), das Objekt Partikel (10b) umfasst, die in oder auf der Oberfläche eines Mediums (10a) dispergiert sind, wobei dieses letztere für die Wellenlänge transparent oder transluzent ist.

**Claims**

**1.** A device (1) for observing an object, by lensless imaging, including:

- a light source (11) that is able to generate a light wave, called the emission wave (12), that propagates along a propagation axis (Z);
- an image sensor (20);
- a holder $(10_s)$ that is able to hold an object (10) and that is placed between the image sensor and the light source such that the image sensor (20) is able to form an image of said object held on the holder; and
- an optical system (15) that is placed between the light source (11) and the holder $(10_s)$ and

that is able to form, from said emission wave, a convergent incident wave $(12_c)$ that propagates from said optical system (15) to the holder $(10_s)$;
- the holder $(10_s)$ defining a plane, called the object plane $(P_{10})$, that is perpendicular to the propagation axis (Z) and that passes through the holder, said optical system (15) being able to conjugate said light source (11) with a secondary source $(11_s)$ that is located in a half space defined by said object plane $(P_{10})$ and that includes the image sensor (20);

the device being **characterized in that**:

- the optical system (15) is configured such that the secondary source $(11_s)$ is located closer to the image sensor (20) than to the holder (10s), such that the image of the object, held on the holder, on the image sensor is affected by a transverse magnification lower than 1.

**2.** Device for observing an object as claimed in claim 1, wherein said optical system (15) is configured such that the secondary source $(11_s)$ is located between the holder (10s) and the image sensor (20).

**3.** The device for observing an object as claimed in claim 1, wherein the image sensor lies in a detection plane $(P_{20})$, said optical system (15) being configured such that the secondary source $(11_s)$ is located in a half space that is defined by the detection plane $(P_{20})$ and that does not include the light source.

**4.** The device for observing an object as claimed in any one of the preceding claims, wherein the optical system (15) is parameterized by a parameter, such that the position of the secondary source $(11_s)$ is adjustable depending on said parameter.

**5.** The device for observing an object as claimed in claim 4, wherein the parameter is a position of the optical system along the propagation axis (Z) or a focal length of the optical system.

**6.** A method for observing an object (10), by lensless imaging, including the following steps:

a) placing the object (10) between a light source (11) and an image sensor (20), the light source being coupled to an optical system (15) that is placed between the light source and the object;
b) activating the light source, the light source then emitting a light wave that is what is called an emission wave (12) that propagates to the optical system, the latter forming a convergent incident light wave $(12_c)$ that propagates to the object; and
c) acquiring, using the image sensor (20), an image of the object thus exposed to said convergent incident wave (12$_c$);

    - the light wave being emitted along a propagation axis (Z), the object defining a plane, called the object plane (P$_{10}$), that passes through the object (10) and that is perpendicular to said propagation axis (Z), such that, in step b), the optical system (15) conjugates the light source (11) with a secondary light source (11$_s$), the latter being located in a half space that is defined by the object plane (P$_{10}$) and that includes the image sensor (20);

the method being **characterized in that**:

    - the secondary source is located closer to the image sensor (20) than to the object (10) so that the image of the object, on the image sensor, is affected by a transverse magnification lower than 1

7. The observing method as claimed in claim 6, wherein the secondary light source is located between the object (10) and the image sensor (20).

8. The observing method as claimed in claim 6, wherein the image sensor (20) lies in a plane, called the detection plane (P$_{20}$), and wherein said secondary light source (11$_s$) is located in a half space that is defined by said detection plane (P$_{20}$) and that does not include said light source (11).

9. The observing method as claimed in any one of claims 6 to 8, wherein step b) also includes a step of adjusting the position of the secondary source (11$_s$) depending on a parameter of the optical system.

10. The observing method as claimed in claim 9, wherein the parameter of the optical system is chosen from:

    - a focal length of said optical system; and
    - a position of said optical system along said propagation axis (Z).

11. The observing method as claimed in any one of claims 6 to 9, wherein, in step c), the image sensor (20) is exposed to an exposure wave (24) including:

    - a wave that is transmitted by the object (22) and that results from the transmission, by the object, of the convergent incident wave (12$_c$); and
    - a diffraction wave (23) that results from the diffraction, by the object, of the convergent incident wave (12$_c$).

12. The observing method as claimed in any one of claims 6 to 11, including a step d) of applying a holographic reconstruction algorithm to the image formed on the image sensor (20) in step c).

13. The observing method as claimed in any one of claims 6 to 12, wherein, the light source (11) emitting said emission light wave (12) at a wavelength ($\lambda$), the object (10) is translucent or transparent at said wavelength ($\lambda$).

14. The observing method as claimed in any one of claims 6 to 13, wherein the light source (11) emitting said emission light wave (12) at a wavelength ($\lambda$), the object includes particles (10b) that are dispersed in or on the surface of a medium (10a), the latter being translucent or transparent at said wavelength.

**Fig. 1A**

**Fig. 1B**

**Fig. 1C**

**Fig. 2**

**Fig. 3**

**Fig. 4A**   **Fig. 4B**   **Fig. 4C**   **Fig. 4D**   **Fig. 4E**

15

13'

$d_{15}$

11     13

P₁₀

P₂₀

11s

10s

Z

10

20

11'

10s

**Fig. 5A**

3     4

**Fig. 5B**

10s

15

P₁₀

P₂₀

13'

11s

11     13

Z

10

20

11'

10s

**Fig. 5C**

**Fig. 6A**

**Fig. 6B**

**Fig. 6C**

**Fig. 7A**

**Fig. 7B**

**Fig. 7C**

**Fig. 8A**

**Fig. 8B**

**Fig. 9A**

**Fig. 9B**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008090330 A
- EP 2592459 A
- WO 2014184390 A

**Littérature non-brevet citée dans la description**

- **REPETTO L.** Lensless digital holographic microscope with light-emitting diode illumination. *Optics Letters,* Mai 2004
- **RYLE et al.** Digital in-line holography of biological specimens. *Proc. Of SPIE,* 2006, vol. 6311
- **MARATHAY, A.** On the usual approximation used in the Rayleigh-Sommerfeld diffraction theory. *J. Opt. Soc. Am. A,* Avril 2004, vol. 21 (4